# EUROPEAN PATENT SPECIFICATION

(11) **EP 3 790 323 B1**
(45) Date of publication and mention of the grant of the patent: **13.08.2025**
(21) Application number: 20189990.3
(22) Date of filing: 07.08.2020
(51) Int. Cl.: H04W 52/02

(54) **TRIGGERING CHANNEL STATE INFORMATION OUTSIDE ACTIVE TIME**
AUSLÖSUNG VON KANALZUSTANDSINFORMATIONEN AUSSERHALB DER AKTIVEN ZEIT
DÉCLENCHEMENT D'INFORMATIONS D'ÉTAT DE CANAL EN DEHORS DU TEMPS ACTIF

(30) Priority: 16.08.2019 US 201962888141 P
(43) Date of publication of application: 10.03.2021
(73) Proprietor: Nokia Technologies Oy, 02610 Espoo (FI)
(72) Inventor: Hakola, Sami, 90450 Kempele (FI); Kaikkonen, Jorma, 90800 Oulu (FI); Koskela, Timo, 90120 Oulu (FI); Karjalainen, Juha, 90540 Oulu (FI); Turtinen, Samuli Heikki, 91100 Ii (FI)
(74) Representative: Script Intellectual Property LLP

(56) References cited:
- WO-A1-2018/085144
- WO-A1-2019/033017
- US-A1- 2011 002 281

## Description

### TECHNICAL FIELD

This description relates to discontinuous reception adaptation.

### BACKGROUND

A communication system may be a facility that enables communication between two or more nodes or devices, such as fixed or mobile communication devices. Signals can be carried on wired or wireless carriers.

An example of a cellular communication system is an architecture that is being standardized by the 3^{rd} Generation Partnership Project, 3GPP. A recent development in this field is often referred to as the long-term evolution, LTE, of the Universal Mobile Telecommunications System, UMTS, radio-access technology. E-UTRA (evolved UMTS Terrestrial Radio Access) is the air interface of 3GPP's LTE upgrade path for mobile networks. In LTE, base stations or access points, APs, which are referred to as enhanced Node AP, eNBs, provide wireless access within a coverage area or cell. In LTE, mobile devices, or mobile stations are referred to as user equipment, UE. LTE has included a number of improvements or developments.

A global bandwidth shortage facing wireless carriers has motivated the consideration of the underutilized millimeter wave, mmWave, frequency spectrum for future broadband cellular communication networks, for example. mmWave (or extremely high frequency) may, for example, include the frequency range between 30 and 300 gigahertz (GHz). Radio waves in this band may, for example, have wavelengths from ten to one millimeter, giving it the name millimeter band or millimeter wave. The amount of wireless data will likely significantly increase in the coming years. Various techniques have been used in attempt to address this challenge including obtaining more spectrum, having smaller cell sizes, and using improved technologies enabling more bits/s/Hz. One element that may be used to obtain more spectrum is to move to higher frequencies, e.g., above 6 GHz. For fifth generation wireless systems (5G), an access architecture for deployment of cellular radio equipment employing mmWave radio spectrum has been proposed. Other example spectrums may also be used, such as cmWave radio spectrum (e.g., 3-30 GHz).

US2011002281A1 discloses Discontinuous reception (DRX) operations for wireless communications implementing carrier aggregation are disclosed. Physical downlink control channel implementation for carrier aggregation is also disclosed. DRX methods are disclosed including a common DRX protocol that may be applied across all component carriers, an individual/independent DRX protocol that is applied on each component carrier, and hybrid approaches that are applied across affected component carriers. Methods for addressing the effects of loss of synchronization on DRX, impact of scheduling request on DRX, uplink power control during DRX, and DRX operation in measurement gaps are disclosed.

WO2018085144A1 discloses systems, apparatuses, and methods to enable coupling between a power states and a beam management states. A method is provided for jointly performing beam management and power management in a wireless transmit/receive unit (WTRU), where the WTRU is configured to operate according to a plurality of power states and a plurality of beam management states that are linked to the plurality of power states such that each power state corresponds to a different beam management state. The method includes detecting a trigger condition; transitioning the WTRU between a first power state to a second power state based on the detected trigger condition; and transitioning the WTRU between a first beam management state to a second beam management state responsive to the transition to the second power state to which the second beam management state is linked.

WO2019033017A1 discloses DRX operations that address impacts of beamforming to current DRX operations. The new NR-PDCCH may affect the downlink control channel monitoring in DRX operations. DRX embodiments are disclosed addressing the impact of new NR-PDCCH to DRX operations. In NR, multiple DRX configurations may be supported, and Ll/2 signaling (such as MAC CE based) can be used for dynamic DRX configuration switching. Signaling and other mechanisms are disclosed to support multiple DRX configurations, and switching between multiple configurations. DRX operations are disclosed addressing the impact of HARQ design in NR to DRX operations. Further DRX operations are disclosed addressing the impact of multiple SR configurations in NR to DRX operation.

### SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided a method as defined by appended claim 1.

The method may further comprise, prior to receiving configuration data, capability data may be transmitted to a base station (gNB), the capability data representing lengths of time required for the UE to perform specified adaptation operations.

The plurality of windows may include a first window having an end that is a first number of time slots from the on portion of the DRX cycle and a second window having an end that is a second number of time slots from the on portion of the DRX cycle, the first number being larger than the second number.

The subset of the plurality of triggering commands with which the first window is associated may include at least one of a bandwidth portion (BWP) adaptation, channel state information reference signal (CSI-RS) measurement and reporting, tracking reference signal (TRS) triggering, and triggering to start monitoring of PDCCHs during the on portion of the DRX cycle.

The subset of the plurality of triggering commands with which the second window is associated may include at least triggering to start monitoring of PDCCHs during the on portion of the DRX cycle.

A beginning of the first window and a beginning of the second window may include the same time slot or produces an overlap duration.

The plurality of windows may further include a third window having an end. The end may be a third number of time slots from the on portion of the DRX cycle. The third number may be larger than the second number. The third number may be smaller than the first number. The subset of the plurality of triggering commands with which the third window is associated may include at least TRS triggering and triggering to start monitoring of PDCCHs during the on portion of the DRX cycle.

The second window may have a duration substantially equal to the offset.

The offset may be based on a duration of the DRX cycle.

The offset may be based on the plurality of triggering commands for adaptation operations.

A common DCI format for triggering commands for adaptation operations may include fields for triggering the monitoring operation over PDCCHs and commands for UE adaptations requiring a processing time specific to the UE.

In response to the configured DRX cycle being below a threshold duration, the corresponding window of the plurality of windows and the offset may have different durations.

A triggering command of the plurality of triggering commands may include the UE determining whether the UE is in a default bandwidth portion, BWP.

The triggering command may further include changing the BWP to a portion that is not the default BWP.

The configuration data may further include a configuration timer such that the UE does not expect to receive specified triggering commands until the configuration timer has expired, the configuration timer starting upon reception of the triggering command,

According to an aspect, there is provided a method as defined by appended claim 3.

The details of one or more examples of implementations are set forth in the accompanying drawings and the description below. Other features will be apparent from the description and drawings, and from the claims.

### BRIEF DESCRIPTION OF THE DRAWINGS

FIG. 1 is a block diagram of a digital communications network according to an example implementation.
FIG. 2 is a diagram illustrating a discontinuous reception, DRX, cycle according to an example implementation.
FIG. 3 is a flow chart illustrating a monitoring process according to an example implementation.
FIG. 4 is a flow chart illustrating a configuration generation process according to an example implementation.
FIG. 5 is a diagram illustrating various windows associated with triggering commands according to an example implementation.
FIG. 6 is a block diagram of a node or wireless station (e.g., base station/access point, relay node, or mobile station/user device) according to an example implementation.

### DETAILED DESCRIPTION

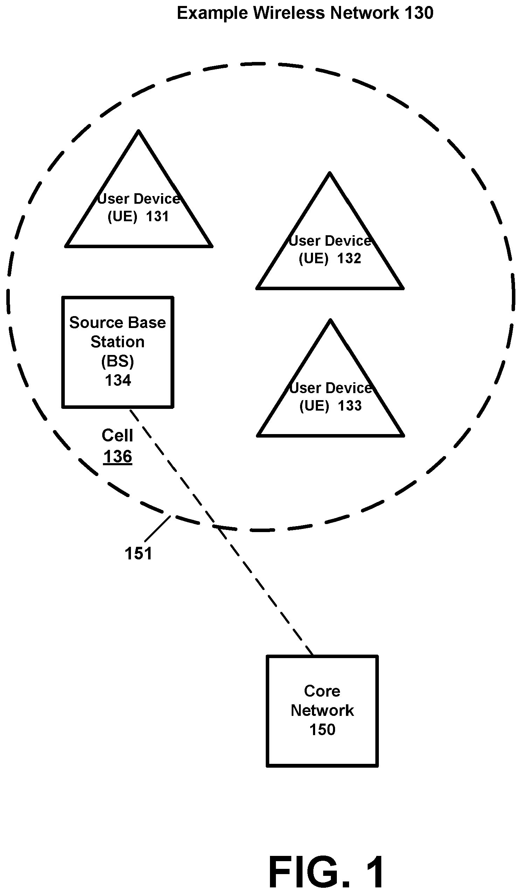

FIG. 1 is a block diagram of a digital communications system such as a wireless network 130 according to an example implementation. In the wireless network 130 of FIG. 1, user devices 131, 132, 133 and 135, which may also be referred to as mobile stations (MSs) or user equipment (UEs), may be connected (and in communication) with a base station (BS) 134, which may also be referred to as an access point (AP), an enhanced Node B (eNB), a gNB (which may be a 5G base station) or a network node. At least part of the functionalities of an access point (AP), base station (BS) or (e)Node B (eNB) may be also be carried out by any node, server or host which may be operably coupled to a transceiver, such as a remote radio head. BS (or AP) 134 provides wireless coverage within a cell 136, including to user devices 131, 132, 133 and 135. Although only four user devices are shown as being connected or attached to BS 134, any number of user devices may be provided. BS 134 is also connected to a core network 150 via an interface 151. This is merely one simple example of a wireless network, and others may be used.

A user device (user terminal, user equipment (UE)) may refer to a portable computing device that includes wireless mobile communication devices operating with or without a subscriber identification module (SIM), including, but not limited to, the following types of devices: a mobile station (MS), a mobile phone, a cell phone, a smartphone, a personal digital assistant (PDA), a handset, a device using a wireless modem (alarm or measurement device, etc.), a laptop and/or touch screen computer, a tablet, a phablet, a game console, a notebook, and a multimedia device, as examples. It should be appreciated that a user device may also be a nearly exclusive uplink only device, of which an example is a camera or video camera loading images or video clips to a network.

In LTE (as an example), core network 150 may be referred to as Evolved Packet Core (EPC), which may include a mobility management entity (MME) which may handle or assist with mobility/handover of user devices between BSs, one or more gateways that may forward data and control signals between the BSs and packet data networks or the Internet, and other control functions or blocks.

The various example implementations may be applied to a wide variety of wireless technologies, wireless networks, such as LTE, LTE-A, 5G (New Radio, or NR), cmWave, and/or mmWave band networks, or any other wireless network or use case. LTE, 5G, cmWave and mmWave band networks are provided only as illustrative examples, and the various example implementations may be applied to any wireless technology/wireless network. The various example implementations may also be applied to a variety of different applications, services or use cases, such as, for example, ultra-reliability low latency communications (URLLC), Internet of Things (IoT), enhanced mobile broadband, massive machine type communications (MMTC), vehicle-to-vehicle (V2V), vehicle-to-device, etc. Each of these use cases, or types of UEs, may have its own set of requirements.

A UE's battery life is an important aspect of a user's experience, which will influence the adoption of 5G NR handsets and/or services. Accordingly, UE power consumption is designed to ensure that UE power efficiency for 5G NR UEs are improved over that of LTE. Power efficiency can relate to efficiency during data transmission as well as a low consumption of energy when no data is transmitted or received.

Because 5G NR supports high speed data transport, the resulting bursts of user data would be served by a network in very short durations. Power saving in a UE involves triggering the UE for network access from a power efficient mode, such as micro sleep or OFF period in the long DRX cycle. In such an approach, the UE would remain in the power efficient mode unless the UE receives an indication of network access through a UE power saving framework. The indication may be part of a wake-up procedure in an RRC CONNECTED state where the UE is configured to receive a power saving signal/channel before a DRX onDuration window, that is, an on portion of a DRX cycle, to trigger the UE waking only when DL data has arrived. The UE is not required to wake up at the DRX on portion for at least PDCCH monitoring, if the power saving signal is not detected.

In conventional approaches to power saving in a UE, the UE could be triggered to wake-up to monitor PDCCH in the next onDuration window. The wake-up indication may also trigger aperiodic CSI-RS transmission and measurement.

In 3GPP NR, a UE in an RRC CONNECTED state can be configured with up to ten search space set configurations that are associated with up to three CORESETs. Each search space set configuration defines how and where the UE is to search PDCCH candidates associated with the search space set via the following higher layer parameters:
- ***monitoringSlotPeriodicityAndOffset*:** slots for PDCCH Monitoring configured as periodicity and offset. If UE is configured to monitor DCI format 2_1, only the values 'sl1', 'sl2' or 'sl4' are applicable. If UE is configured to monitor DCI format 2_0, only the values 'sll', 'sl2', 'sl4', 'sl5', 'sl8', 'sl10', 'sl16', and 'sl20' are applicable; and
- ***duration***: a number of consecutive slots over which a search space lasts in every occasion, i.e., upon every period as given in the monitoringSlotPeriodicityAndOffset. If the field is absent, the UE applies the value 1 slot, except for DCI format 2_0. The UE ignores this field for DCI format 2_0. The maximum valid duration is periodicity-1 (periodicity as given in the monitoringSlotPeriodicityAndOffset).

The PDCCH monitoring activity of the UE in RRC connected mode is governed by DRX and bandwidth adaptation (via BWP framework). When DRX is configured, the UE does not have to continuously monitor PDCCH. DRX is characterized by the following parameters:
- **on-duration:** duration that the UE waits for, after waking up, to receive PDCCHs. If the UE successfully decodes a PDCCH, the UE stays awake and starts the inactivity timer;
- **inactivity-timer:** duration that the UE waits to successfully decode a PDCCH, from the last successful decoding of a PDCCH, failing which it can go back to sleep. The UE shall restart the inactivity timer following a single successful decoding of a PDCCH for a first transmission only (i.e., not for retransmissions);
- **retransmission-timer**: duration until a retransmission can be expected;
- **cycle:** specifies the periodic repetition of the on-duration followed by a possible period of inactivity; the on-duration is the on portion of the cycle;
- **active-time:** total duration that the UE monitors PDCCH. This includes the on portion of the DRX cycle, the time UE is performing continuous reception while the inactivity timer has not expired, and the time when the UE is performing continuous reception while waiting for a retransmission opportunity.

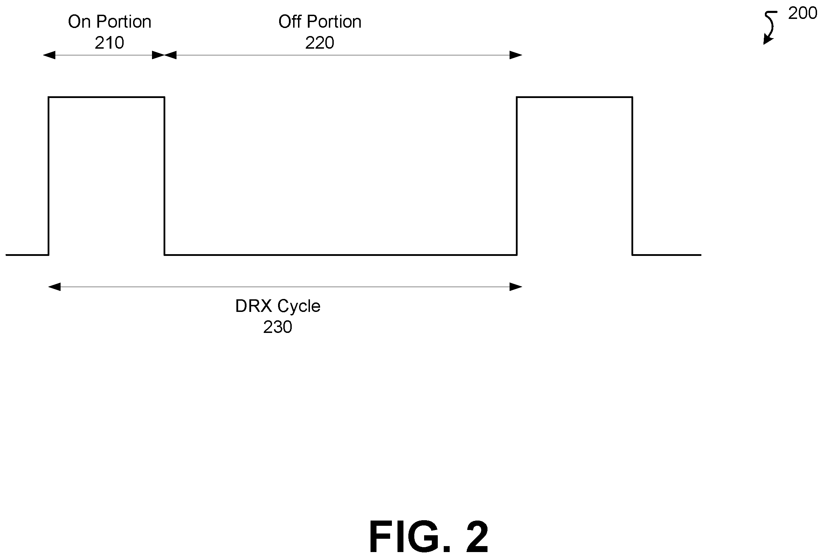

FIG. 2 is a diagram illustrating a discontinuous reception (DRX) cycle 230 according to an example implementation. As shown in FIG. 2, the DRX cycle includes an on portion 210 and an off portion 220. The on portion 210 corresponds to the onDuration discussed above.

When bandwidth adaptation is configured, the UE only needs to monitor PDCCH on the one active BWP i.e., it does not have to monitor PDCCH on the entire DL frequency of the cell. A BWP inactivity timer (independent from the DRX inactivity-timer described above) is used to switch the active BWP to the default one: the timer is restarted upon successful PDCCH decoding and the switch to the default BWP takes place when it expires.

The wake-up signal may trigger a BWP adaptation, a CSI-RS measurement and reporting, a TRS triggering, and a triggering to start monitoring during the on portion. Each of these triggered processes uses UE processing resources and requires some time. The above-described conventional approaches to power saving in a UE makes no allowances for such processing times and may degrade the ability of the UE to save power.

In contrast to the above-described conventional approaches to power saving in a UE, improved techniques of power saving in a UE include providing a base station (gNB) with capability to determine validity of triggering mechanisms during an offset in time prior to the on portion of the DRX cycle. This capability includes a plurality of windows during which specified triggering mechanisms are valid. Along these lines, a UE provides capability information to the gNB), where the UE may indicate how long time it would take for the UE to perform certain adaptations in response to triggering commands (e.g., BWP switch, CSI-RS measurement and reporting, etc.). The gNB then generates DRX configuration data based on the capability information, including determining which triggering commands are active for the UE and sends the DRX configuration data to the UE. The UE then starts monitoring wake-up signals, e.g., configured DCI format(s) on PDCCH that are valid based on determined windows, associated DCI formats, and triggering commands. Upon detection of a configured DCI format, the UE performs an adaptation operation according to determined, valid triggering commands.

Advantageously, by determining whether triggering mechanisms are valid within certain windows, a UE can ignore those mechanisms that may interfere with its ability to save power.

In some implementations, a group common DCI format for UE adaptation triggering commands includes fields only for triggering PDCCH monitoring adaptation. In such implementations, triggering commands for UE adaptations requiring UE specific processing time are provided in UE-specific DCI format.

In some implementations, when a UE is configured with a short DRXcycle and a long DRXcycle, or when the configured DRX cycle is below a threshold (e.g., 20 ms), the corresponding window and related offsets for triggering commands may be different or restricted. For example, such as that for DRX cycle periods shorter than 10ms, the UE does not expect to receive a triggering adaptation command for CSI reporting. In such implementations, when the configured/applied DRX cycle period is longer than a threshold (e.g., 40 ms), the UE may be provided with triggering command for a BWP switch.

In some implementations, when the UE determines that it is in a default BWP, then the UE may determine that the BWP switch is a possible adaptation operation to be triggered.

In some implementations, the UE is configured with a timer, e.g., in ms or in number of DRX cycles (for long and/or short DRX cycles). In such implementations, the UE does not expect to receive certain triggering adaption commands such as BWP change until the timer has expired.

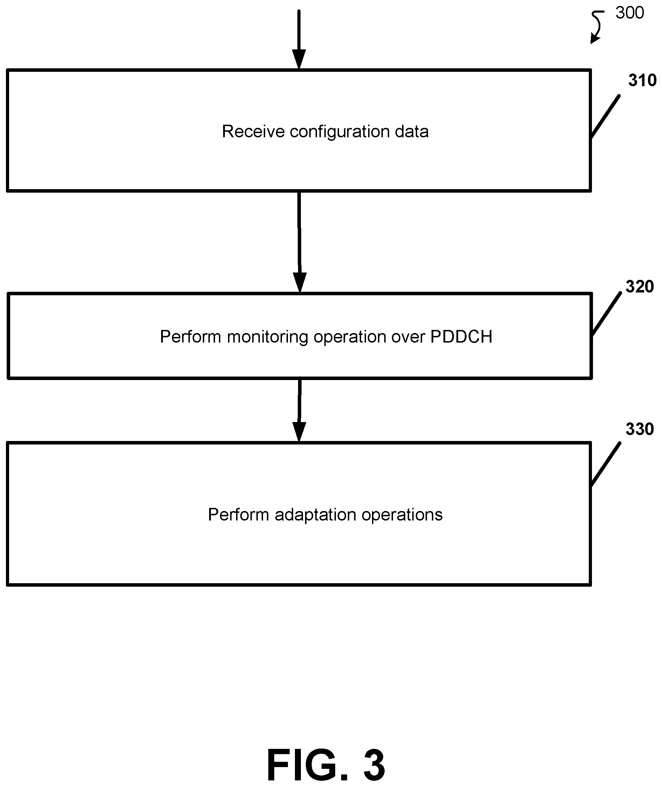

FIG. 3 shows a flow chart illustrating an example method 300 of performing the improved techniques. Operation 310 includes receiving, by controlling circuitry of a user equipment (UE), configuration data representing (i) an offset from a start of an on portion of a discontinuous reception (DRX) cycle including the on portion and an off portion, the offset being a specified number of time slots, (ii) identifiers of a plurality of triggering commands for adaptation operations that are active for the UE, and (iii) a plurality of windows, each of the plurality of windows having a specified duration within the offset and being associated with a respective subset of the triggering commands and a respective downlink control information (DCI) format. Operation 320 includes performing a monitoring operation over physical downlink control channels (PDCCHs) to determine whether a PDCCH having a DCI format with which at least one of the plurality of windows is associated is present. Operation 330 includes, in response to detecting a PDCCH having the DCI format, performing an adaptation operation according to triggering commands of the plurality of triggering commands with which the at least one of the plurality of windows is associated.

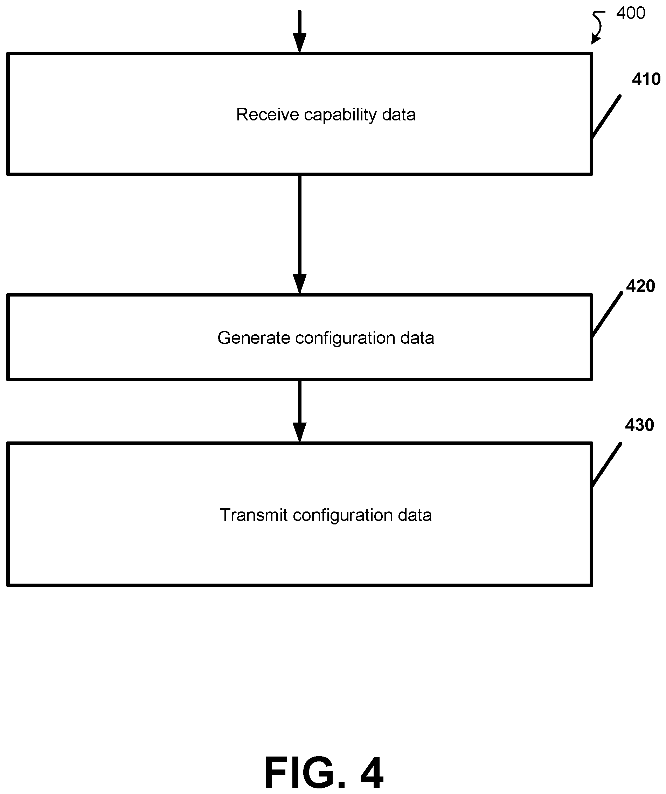

FIG. 4 is a flow chart illustrating an example method 400 of performing the improved techniques. Operation 410 includes receiving, by processing circuitry of a base station (gNB), capability data from a user equipment (UE), the capability data representing lengths of time required for the UE to perform specified adaptation operations. Operation 420 includes, in response to receiving the capability data, generating configuration data representing (i) an offset from a start of an on portion of a discontinuous reception (DRX) cycle including the on portion and an off portion, the offset being a specified number of time slots, (ii) identifiers of a plurality of triggering commands for adaptation operations that are active for the UE, and (iii) a plurality of windows, each of the plurality of windows having a specified duration within the offset and being associated with a respective subset of the triggering commands and a respective downlink control information (DCI) format. Operation 430 includes transmitting the capability data to the UE.

Further example implementations and/or example details will now be provided.

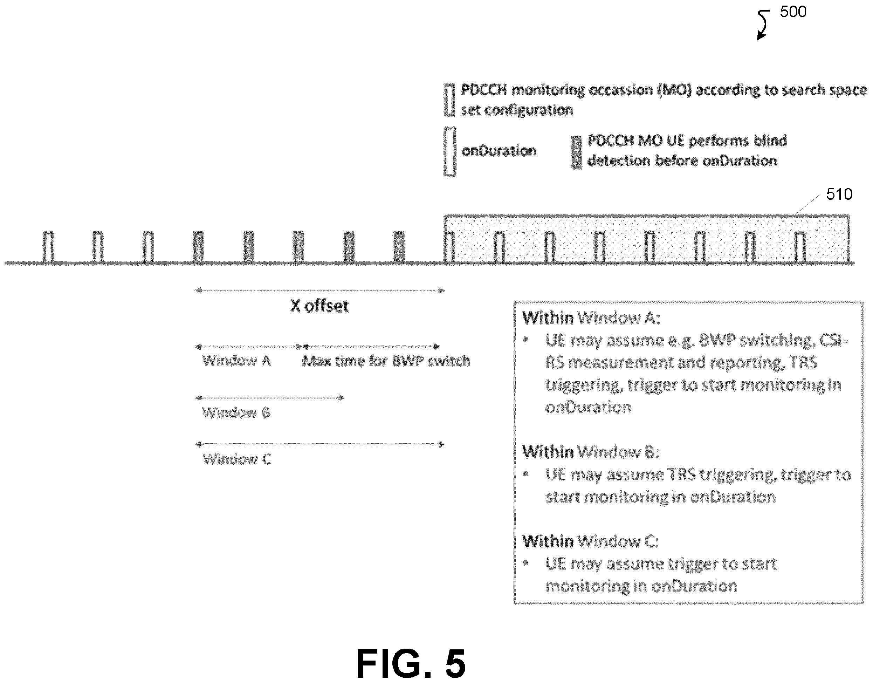

FIG. 5 is a diagram illustrating various windows 500 associated with triggering commands and preceding an on portion 510 of a DRX cycle according to an example implementation. As shown in FIG. 5, the windows 500 include a Window A, Window B, and Window C. In some implementations, there may be more windows or simply one or two windows. Also as shown in FIG. 5, there is an X offset that corresponds to a full window preceding the on portion 510 of the DRX cycle. Each window is defined such that the end of that window and the start of the on portion 510 of the DRX cycle is equal to or greater than a minimum time needed for an adaptation operation associated with that window, requiring a maximum application latency.

As shown in FIG. 5, Window A is associated with a UE-specific DCI format which may trigger BWP switching, CSI-RS measurement and reporting, TRS triggering, and a trigger to start monitoring during the on portion 510 of the DRX cycle. Window A has a shorter duration than the full window and there would be time gap between end of Window A and start of the on portion 510 of the DRX cycle according to the longest application latency among associated triggering commands.

As shown in FIG. 5, Window B is associated with the TRS triggering and the trigger to start monitoring during the on portion 510 of the DRX cycle. Window B has a shorter duration than the full window and there would be time gap between end of Window B and start of the on portion 510 of the DRX cycle according to the longest application latency among associated triggering commands. Further, Window B has a duration longer than that of Window A. Accordingly, some trigger command such as those for BWP switching and CSI-RS measurement and reporting may not be valid in time slots within Window B because the time outside of Window B within the X offset may not be sufficient to perform the adaptation operations corresponding to those trigger commands.

As shown in FIG. 5, Window C is associated with the trigger to start monitoring during the on portion 510 of the DRX cycle. Window C is associated with the full window such that there are no time slots between Window C and the on portion 510 of the DRX cycle. Accordingly, all trigger commands except the trigger to start monitoring during the on portion 510 of the DRX cycle may not be valid in Window C.

In some implementations, there are other windows corresponding to other trigger commands for adaptation operations.

In some implementations, if the UE receives a triggering command (e.g., DCI format) including fields that are associated with a window has already ended before the next on portion of the DRX cycle, the UE ignores those fields and assume that those parameters values describing the DRX are unchanged or have some predefined value.

In some implementations, there is an overlap duration (e.g., a number of time slots) between a beginning of a first window (e.g., Window A) and a beginning of a second window (e.g., Window C).

In some implementations, there is a common full window. Based on a detected triggering command time, it can be determined when the UE is assumed to be ready to monitor PDCCHs within the on portion 510 of the DRX cycle.

In some implementations, a window duration and/or possible triggering commands is based on the applied DRX cycle. In other words, while in a short DRX cycle there may only be a short Window C just before the on portion 510 of the DRX cycle (i.e., to be able to trigger only PDCCH monitoring for the on portion 510). Alternatively, in a long DRX cycle, all trigger commands may be valid.

In some implementations, a window duration and/or possible triggering commands is based on events that may occur before the start of the on portion 510 of the DRX cycle. For example, an offset X1 and window duration W1 may be used for a long DRX cycle' that is, the offset X1 is far away from the on portion 510 of the DRX cycle to allow all adaptation operations be ready before the on portion 510. The adaptation operations may include the BWP switch, an A-CSI trigger, an A-TRS trigger, and PDCCH monitoring within the on portion 510 of the DRX cycle. In another example, an offset X2 and window duration W2 may be used for short DRX cycle, e.g., very close to the on portion 510 of the DRX cycle. The adaptation operations allowed here may include the A-TRS trigger and PDCCH monitoring within the on portion 510 of the DRX cycle.

### List of example abbreviations:

- CORESET: Control Resource Set
- CSI-RS: Channel State Information Reference Signal
- DCI: Downlink Control Information
- DRX: Discontinuous Reception
- gNB: 5G NodeB
- PDCCH: Physical Downlink Control Channel
- RRC: Radio Resource Control
- TRS: Tracking Reference Signal (variant of CSI-RS)
- UE: User Equipment

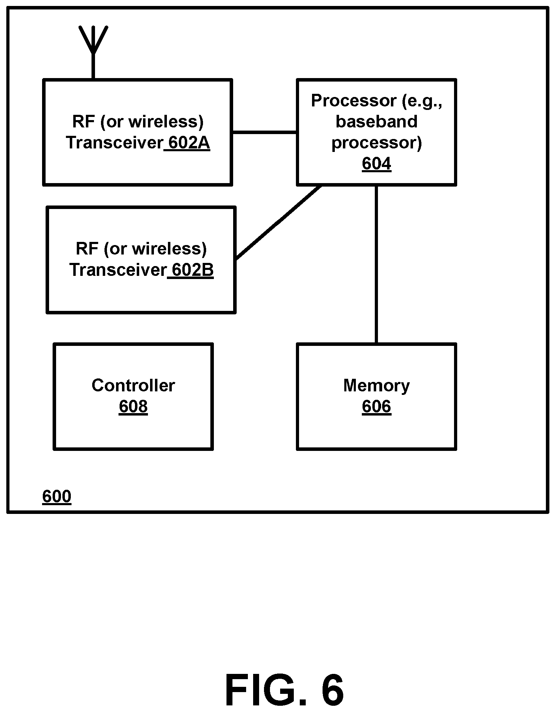

FIG. 6 is a block diagram of a wireless station (e.g., AP, BS, eNB, UE or user device) 600 according to an example implementation. The wireless station 600 may include, for example, one or two RF (radio frequency) or wireless transceivers 602A, 602B, where each wireless transceiver includes a transmitter to transmit signals and a receiver to receive signals. The wireless station also includes a processor or control unit/entity (controller) 604 to execute instructions or software and control transmission and receptions of signals, and a memory 606 to store data and/or instructions.

Processor 604 may also make decisions or determinations, generate frames, packets or messages for transmission, decode received frames or messages for further processing, and other tasks or functions described herein. Processor 604, which may be a baseband processor, for example, may generate messages, packets, frames or other signals for transmission via wireless transceiver 602 (602A or 602B). Processor 604 may control transmission of signals or messages over a wireless network, and may control the reception of signals or messages, etc., via a wireless network (e.g., after being down-converted by wireless transceiver 602, for example). Processor 604 may be programmable and capable of executing software or other instructions stored in memory or on other computer media to perform the various tasks and functions described above, such as one or more of the tasks or methods described above. Processor 604 may be (or may include), for example, hardware, programmable logic, a programmable processor that executes software or firmware, and/or any combination of these. Using other terminology, processor 604 and transceiver 602 together may be considered as a wireless transmitter/receiver system, for example.

In addition, referring to FIG. 6, a controller (or processor) 608 may execute software and instructions, and may provide overall control for the station 600, and may provide control for other systems not shown in FIG. 6, such as controlling input/output devices (e.g., display, keypad), and/or may execute software for one or more applications that may be provided on wireless station 600, such as, for example, an email program, audio/video applications, a word processor, a Voice over IP application, or other application or software.

In addition, a storage medium may be provided that includes stored instructions, which when executed by a controller or processor may result in the processor 604, or other controller or processor, performing one or more of the functions or tasks described above.

According to another example implementation, RF or wireless transceiver(s) 602A/602B may receive signals or data and/or transmit or send signals or data. Processor 604 (and possibly transceivers 602A/602B) may control the RF or wireless transceiver 602A or 602B to receive, send, broadcast or transmit signals or data.

The embodiments are not, however, restricted to the system that is given as an example, but a person skilled in the art may apply the solution to other communication systems. Another example of a suitable communications system is the 5G concept. It is assumed that network architecture in 5G will be quite similar to that of the LTE-advanced. 5G is likely to use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates.

It should be appreciated that future networks will most probably utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations may be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

Implementations of the various techniques described herein may be implemented in digital electronic circuitry, or in computer hardware, firmware, software, or in combinations of them. Implementations may be implemented as a computer program product, i.e., a computer program tangibly embodied in an information carrier, e.g., in a machine-readable storage device or in a propagated signal, for execution by, or to control the operation of, a data processing apparatus, e.g., a programmable processor, a computer, or multiple computers. Implementations may also be provided on a computer readable medium or computer readable storage medium, which may be a non-transitory medium. Implementations of the various techniques may also include implementations provided via transitory signals or media, and/or programs and/or software implementations that are downloadable via the Internet or other network(s), either wired networks and/or wireless networks. In addition, implementations may be provided via machine type communications (MTC), and also via an Internet of Things (IoT).

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers.

Furthermore, implementations of the various techniques described herein may use a cyber-physical system (CPS) (a system of collaborating computational elements controlling physical entities). CPS may enable the implementation and exploitation of massive amounts of interconnected ICT devices (sensors, actuators, processors, microcontrollers,...) embedded in physical objects at different locations. Mobile cyber physical systems, in which the physical system in question has inherent mobility, are a subcategory of cyber-physical systems. Examples of mobile physical systems include mobile robotics and electronics transported by humans or animals. The rise in popularity of smartphones has increased interest in the area of mobile cyber-physical systems. Therefore, various implementations of techniques described herein may be provided via one or more of these technologies.

A computer program, such as the computer program(s) described above, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer, chip or chipset. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, implementations may be implemented on a computer having a display device, e.g., a cathode ray tube (CRT) or liquid crystal display (LCD) monitor, for displaying information to the user and a user interface, such as a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes aback-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

## Claims

1. A method, comprising:
receiving, by controlling circuitry of a user equipment, configuration data representing (i) an offset from a start of an on portion of a discontinuous reception cycle including the on portion and an off portion, the offset being a specified number of time slots, (ii) identifiers of a plurality of triggering commands for adaptation operations that are active for the user equipment, and (iii) a plurality of windows, each of the plurality of windows having a specified duration within the offset and being associated with a respective subset of the triggering commands and a respective downlink control information format;
performing a monitoring operation over physical downlink control channels to determine whether a physical downlink control channel having a downlink control information format with which at least one of the plurality of windows is associated is present; and
in response to detecting a physical downlink control channel having the downlink control information format, performing an adaptation operation according to triggering commands of the plurality of triggering commands with which the at least one of the plurality of windows is associated.

2. The method as in claim 1, further comprising, prior to receiving the configuration data, transmitting capability data to a base station, the capability data representing lengths of time required for the user equipment to perform specified adaptation operations.

3. A method, comprising:
receiving, by processing circuitry of a base station, capability data from a user equipment, the capability data representing lengths of time required for the user equipment to perform specified adaptation operations;
in response to receiving the capability data, generating configuration data representing (i) an offset from a start of an on portion of a discontinuous reception cycle including the on portion and an off portion, the offset being a specified number of time slots, (ii) identifiers of a plurality of triggering commands for adaptation operations that are active for the user equipment, and (iii) a plurality of windows, each of the plurality of windows having a specified duration within the offset and being associated with a respective subset of the triggering commands and a respective downlink control information format; and
transmitting the configuration data to the user equipment.

4. The method as in any one of claims 1 to 3, wherein the plurality of windows include a first window having an end that is a first number of time slots from the on portion of the discontinuous reception cycle and a second window having an end that is a second number of time slots from the on portion of the discontinuous reception cycle, the first number being larger than the second number.

5. The method as in claim 4, wherein the subset of the plurality of triggering commands with which the first window is associated includes at least one of a bandwidth portion adaptation, channel state information reference signal measurement and reporting, tracking reference signal triggering, and triggering to start monitoring of physical downlink control channels during the on portion of the discontinuous reception cycle.

6. The method as in claim 4 or 5, wherein the subset of the plurality of triggering commands with which the second window is associated includes at least triggering to start monitoring of physical downlink control channels during the on portion of the discontinuous reception cycle.

7. The method as in any one of claims 4 to 6, wherein a beginning of the first window and a beginning of the second window includes the same time slot or produces an overlap duration.

8. The method as in any one of claims 4 to 7, wherein the plurality of windows further include a third window having an end that is a third number of time slots from the on portion of the discontinuous reception cycle, the third number being larger than the second number and smaller than the first number, wherein the subset of the plurality of triggering commands with which the third window is associated includes at least tracking reference signal triggering and triggering to start monitoring of physical downlink control channels during the on portion of the discontinuous reception cycle.

9. The method as in any one of claims 4 to 8, wherein second window has a duration substantially equal to the offset.

10. The method as in any one of preceding claims, wherein the offset is based on the plurality of triggering commands for adaptation operations.

11. The method as in any one of preceding claims, wherein a common downlink control information format for triggering commands for adaptation operations includes fields for triggering to start monitoring of physical downlink control channels and commands for user equipment adaptations requiring a processing time specific to the user equipment.

12. The method as in any one of claims 1 to 11, wherein, in response to the configured discontinuous reception cycle being below a threshold duration, the corresponding window of the plurality of windows and the offset have different durations.

13. The method as in any one of claims 1 to 12, wherein:
a triggering command of the plurality of triggering commands includes the user equipment determining whether the user equipment is in a default bandwidth portion; and
the triggering command further includes changing the bandwidth portion to a portion that is not the default bandwidth portion.

14. The method as in any one of preceding claims, wherein the configuration data further includes a configuration timer such that the user equipment does not expect to receive specified triggering commands until the configuration timer has expired, the configuration timer starting upon reception of the triggering command.

15. An apparatus, comprising means for performing the method of any one of preceding claims.

## Patentansprüche

1. Verfahren, das Folgendes umfasst:
Empfangen von Auslegungsdaten durch eine Steuerschaltung einer Teilnehmereinrichtung, die (i) einen Versatz von einem Start eines eingeschalteten Abschnitts eines diskontinuierlichen Empfangszyklus, der den eingeschalteten Abschnitt und einen ausgeschalteten Abschnitt beinhaltet, wobei der Versatz eine spezifizierte Anzahl von Zeitschlitzen ist, (ii) Kennungen einer Vielzahl von Auslösebefehlen für Anpassungsoperationen, die für die Teilnehmereinrichtung aktiv sind, und (iii) eine Vielzahl von Fenstern, wobei jedes der Vielzahl von Fenstern eine spezifizierte Dauer im Versatz aufweist und mit einem jeweiligen Untersatz der Auslösebefehle und einem jeweiligen Downlinksteuerinformationsformat verknüpft ist, repräsentieren;
Durchführen einer Überwachungsoperation über physische Downlinksteuerkanäle, um zu bestimmen, ob ein physischer Downlinksteuerkanal vorhanden ist, der ein Downlinksteuerinformationsformat aufweist, mit dem mindestens eines der Vielzahl von Fenstern verknüpft ist; und
in Reaktion auf das Detektieren eines physischen Downlinksteuerkanals, der das Downlinksteuerinformationsformat aufweist, Durchführen einer Anpassungsoperation gemäß den Auslösebefehlen der Vielzahl von Auslösebefehlen, mit denen das mindestens eine der Vielzahl von Fenstern verknüpft ist.

2. Verfahren nach Anspruch 1, das vor dem Empfangen der Auslegungsdaten ferner das Übertragen von Fähigkeitsdaten zu einer Basisstation umfasst, wobei die Fähigkeitsdaten Zeitlängen repräsentieren, die erforderlich sind, damit die Teilnehmereinrichtung spezifizierte Anpassungsoperationen durchführen kann.

3. Verfahren, das Folgendes umfasst:
Empfangen von Fähigkeitsdaten durch eine Verarbeitungsschaltung einer Basisstation von einer Teilnehmereinrichtung, wobei die Fähigkeitsdaten Zeitlängen repräsentieren, die erforderlich sind, damit die Teilnehmereinrichtung spezifizierte Anpassungsoperationen durchführen kann;
in Reaktion auf das Empfangen der Fähigkeitsdaten Erzeugen von Auslegungsdaten, die (i) einen Versatz von einem Start eines eingeschalteten Abschnitts eines diskontinuierlichen Empfangszyklus, der den eingeschalteten Abschnitt und einen ausgeschalteten Abschnitt beinhaltet, wobei der Versatz eine spezifizierte Anzahl von Zeitschlitzen ist, (ii) Kennungen einer Vielzahl von Auslösebefehlen für Anpassungsoperationen, die für die Teilnehmereinrichtung aktiv sind, und (iii) eine Vielzahl von Fenstern repräsentieren, wobei jedes der Vielzahl von Fenstern eine spezifizierte Dauer im Versatz aufweist und mit einem jeweiligen Untersatz der Auslösebefehle und einem jeweiligen Downlinksteuerinformationsformat verknüpft ist; und
Übertragen der Auslegungsdaten zur Teilnehmereinrichtung.

4. Verfahren nach einem der Ansprüche 1 bis 3, wobei die Vielzahl von Fenstern ein erstes Fenster, das ein Ende aufweist, das eine erste Anzahl von Zeitschlitzen vom eingeschalteten Abschnitt des diskontinuierlichen Empfangszyklus ist, und ein zweites Fenster beinhalten, das ein Ende aufweist, das eine zweite Anzahl von Zeitschlitzen vom eingeschalteten Abschnitt des diskontinuierlichen Empfangszyklus ist, wobei die erste Anzahl größer ist als die zweite Anzahl.

5. Verfahren nach Anspruch 4, wobei der Untersatz der Vielzahl von Auslösebefehlen, mit denen das erste Fenster verknüpft ist, mindestens eines von einer Bandbreitenabschnittsanpassung, einer Messung und Meldung eines Kanalzustandsinformationsreferenzsignals, das Auslösen eines Verfolgungsreferenzsignals und das Auslösen des Starts der Überwachung des physischen Downlinksteuerkanals während des eingeschalteten Abschnitts des diskontinuierlichen Empfangszyklus beinhaltet.

6. Verfahren nach Anspruch 4 oder 5, wobei der Untersatz der Vielzahl von Auslösebefehlen, mit denen das zweite Fenster verknüpft ist, mindestens das Auslösen des Starts der Überwachung des physischen Downlinksteuerkanals während des eingeschalteten Abschnitts des diskontinuierlichen Empfangszyklus beinhaltet.

7. Verfahren nach einem der Ansprüche 4 bis 6, wobei ein Anfang des ersten Fensters und ein Anfang des zweiten Fensters denselben Zeitschlitz beinhalten oder eine Überlappungsdauer produzieren.

8. Verfahren nach einem der Ansprüche 4 bis 7, wobei die Vielzahl von Fenstern ferner ein drittes Fenster beinhalten, das ein Ende aufweist, das eine dritte Anzahl von Zeitschlitzen vom eingeschalteten Abschnitt des diskontinuierlichen Empfangszyklus ist, wobei die dritte Anzahl größer ist als die zweite Anzahl und kleiner als die erste Anzahl, wobei der Untersatz der Vielzahl von Auslösebefehlen, mit denen das dritte Fenster verknüpft ist, mindestens das Auslösen eines Verfolgungsreferenzsignals und das Auslösen des Starts des Überwachens des physischen Downlinksteuerkanals während des eingeschalteten Abschnitts des diskontinuierlichen Empfangszyklus beinhaltet.

9. Verfahren nach einem der Ansprüche 4 bis 8, wobei ein zweites Fenster eine Dauer aufweist, die dem Versatz im Wesentlichen gleich ist.

10. Verfahren nach einem der vorhergehenden Ansprüche, wobei der Versatz auf der Vielzahl von Auslösebefehlen für Anpassungsoperationen basiert.

11. Verfahren nach einem der vorhergehenden Ansprüche, wobei ein gemeinsames Downlinksteuerinformationsformat zum Auslösen von Befehlen für Anpassungsoperationen Felder zum Auslösen des Starts des Überwachens von physischen Downlinksteuerkanälen und von Befehlen für Teilnehmereinrichtunganpassungen, die eine Verarbeitungszeit erfordern, die für die Teilnehmereinrichtung spezifisch ist, beinhaltet.

12. Verfahren nach einem der Ansprüche 1 bis 11, wobei in Reaktion darauf, dass der ausgelegte diskontinuierliche Empfangszyklus unter einer Schwellwertdauer liegt, das entsprechende Fenster der Vielzahl von Fenstern und der Versatz unterschiedliche Dauern aufweisen.

13. Verfahren nach einem der Ansprüche 1 bis 12, wobei:
ein Auslösebefehl der Vielzahl von Auslösebefehlen beinhaltet, dass die Teilnehmereinrichtung bestimmt, ob sich die Teilnehmereinrichtung in einem standardmäßigen Bandbreitenabschnitt befindet; und
der Auslösebefehl ferner das Ändern des Bandbreitenabschnitts in einen Abschnitt beinhaltet, der nicht der standardmäßige Bandbreitenabschnitt ist.

14. Verfahren nach einem der vorhergehenden Ansprüche, wobei die Auslegungsdaten ferner einen Auslegungstimer beinhalten, derart, dass die Teilnehmereinrichtung das Empfangen von spezifizierten Auslösebefehlen nicht erwartet, bevor der Auslegungstimer abgelaufen ist, wobei der Auslegungstimer nach Empfang des Auslösebefehls startet.

15. Vorrichtung, die Mittel zum Durchführen des Verfahrens von einem von vorhergehenden Ansprüche umfasst.

## Revendications

1. Procédé, comprenant les étapes suivantes :
recevoir, en contrôlant un ensemble de circuits d'un équipement utilisateur, des données de configuration représentant (i) un décalage par rapport à un début d'une partie MARCHE d'un cycle de réception discontinu comportant la partie MARCHE et une partie ARRÊT, le décalage étant un nombre spécifié de tranches de temps, (ii) des identifiants d'une pluralité de commandes de déclenchement pour des opérations d'adaptation qui sont actives pour l'équipement utilisateur, et (iii) une pluralité de fenêtres, chacune de la pluralité de fenêtres ayant une durée spécifiée à l'intérieur du décalage et étant associée à un sous-ensemble respectif des commandes de déclenchement et à un format d'informations de contrôle de liaison descendante respectif ;
effectuer une opération de surveillance sur des canaux physiques de contrôle de liaison descendante pour déterminer si un canal physique de contrôle de liaison descendante ayant un format d'informations de contrôle de liaison descendante auquel au moins une de la pluralité de fenêtres est associée est présent; et
en réponse à la détection d'un canal physique de contrôle de liaison descendante ayant le format d'informations de contrôle de liaison descendante, effectuer une opération d'adaptation selon les commandes de déclenchement de la pluralité de commandes de déclenchement auxquelles l'au moins une de la pluralité de fenêtres est associée.

2. Procédé selon la revendication 1, comprenant en outre, avant de recevoir les données de configuration, le fait de transmettre des données de capacité à une station de base, les données de capacité représentant des périodes de temps nécessaires à l'équipement utilisateur pour effectuer des opérations d'adaptation spécifiées.

3. Procédé, comprenant les étapes suivantes :
recevoir d'un équipement utilisateur, par un ensemble de circuits de traitement d'une station de base, des données de capacité, les données de capacité représentant des périodes de temps nécessaires à l'équipement utilisateur pour effectuer des opérations d'adaptation spécifiées ;
en réponse à la réception des données de capacité, générer des données de configuration représentant (i) un décalage par rapport à un début d'une partie MARCHE d'un cycle de réception discontinu comportant la partie MARCHE et une partie ARRÊT, le décalage étant un nombre spécifié de tranches de temps, (ii) des identifiants d'une pluralité de commandes de déclenchement pour des opérations d'adaptation qui sont actives pour l'équipement utilisateur, et (iii) une pluralité de fenêtres, chacune de la pluralité de fenêtres ayant une durée spécifiée à l'intérieur du décalage et étant associée à un sous-ensemble respectif des commandes de déclenchement et à un format d'informations de contrôle de liaison descendante respectif ; et
transmettre les données de configuration à l'équipement utilisateur.

4. Procédé selon l'une des revendications 1 à 3, dans lequel la pluralité de fenêtres comporte une première fenêtre ayant une extrémité qui est un premier nombre de tranches de temps à partir de la partie MARCHE du cycle de réception discontinu, et une deuxième fenêtre ayant une extrémité qui est un deuxième nombre de tranches de temps à partir de la partie MARCHE du cycle de réception discontinu, le premier nombre étant supérieur au deuxième nombre.

5. Procédé selon la revendication 4, dans lequel le sous-ensemble de la pluralité de commandes de déclenchement auquel la première fenêtre est associée comporte au moins un parmi une adaptation de partie de bande passante, une mesure et un rapport de signal de référence d'informations d'état de canal, un déclenchement de signal de référence de suivi, et un déclenchement pour démarrer la surveillance de canaux physiques de contrôle de liaison descendante pendant la partie MARCHE du cycle de réception discontinu.

6. Procédé selon la revendication 4 ou 5, dans lequel le sous-ensemble de la pluralité de commandes de déclenchement auquel la deuxième fenêtre est associée comporte au moins un déclenchement pour démarrer la surveillance de canaux physiques de contrôle de liaison descendante pendant la partie MARCHE du cycle de réception discontinu.

7. Procédé selon l'une des revendications 4 à 6, dans lequel un début de la première fenêtre et un début de la deuxième fenêtre comportent la même tranche de temps ou produisent une durée de chevauchement.

8. Procédé selon l'une des revendications 4 à 7, dans lequel la pluralité de fenêtres comporte en outre une troisième fenêtre ayant une extrémité qui est un troisième nombre de tranches de temps à partir de la partie MARCHE du cycle de réception discontinu, le troisième nombre étant supérieur au deuxième nombre et inférieur au premier nombre, dans lequel le sous-ensemble de la pluralité de commandes de déclenchement auquel la troisième fenêtre est associée comporte au moins un déclenchement de signal de référence de suivi et un déclenchement pour démarrer la surveillance de canaux physiques de contrôle de liaison descendante pendant la partie MARCHE du cycle de réception discontinu.

9. Procédé selon l'une des revendications 4 à 8, dans lequel deuxième fenêtre a une durée sensiblement égale au décalage.

10. Procédé selon l'une des revendications précédentes, dans lequel le décalage est basé sur la pluralité de commandes de déclenchement pour des opérations d'adaptation.

11. Procédé selon l'une des revendications précédentes, dans lequel un format d'informations de contrôle de liaison descendante commun des commandes de déclenchement pour les opérations d'adaptation comporte des champs pour déclencher le démarrage de la surveillance de canaux physiques de contrôle de liaison descendante et des commandes pour des adaptations d'équipement utilisateur nécessitant un temps de traitement spécifique à l'équipement utilisateur.

12. Procédé selon l'une des revendications 1 à 11, dans lequel, en réponse au fait que le cycle de réception discontinu configuré est en dessous d'une durée seuil, la fenêtre correspondante de la pluralité de fenêtres et le décalage ont des durées différentes.

13. Procédé selon l'une des revendications 1 à 12, dans lequel :
une commande de déclenchement de la pluralité de commandes de déclenchement comporte le fait que l'équipement utilisateur détermine si l'équipement utilisateur se trouve dans une partie de bande passante par défaut ; et
la commande de déclenchement comporte en outre le changement de la partie de bande passante en une partie qui n'est pas la partie de bande passante par défaut.

14. Procédé selon l'une des revendications précédentes, dans lequel les données de configuration comportent en outre un temporisateur de configuration tel que l'équipement utilisateur ne s'attend pas à recevoir des commandes de déclenchement spécifiées jusqu'à l'expiration du temporisateur de configuration, le temporisateur de configuration démarrant à la réception de la commande de déclenchement.

15. Appareil, comprenant des moyens pour effectuer le procédé selon l'une des revendications précédentes.
